# FASCICULE DE BREVET EUROPEEN

(11) **EP 3 433 979 B1**
(45) Date de publication et mention de la délivrance du brevet: **26.02.2020**
(21) Numéro de dépôt: 17717782.1
(22) Date de dépôt: 23.03.2017
(51) Int. Cl.: H04L 12/28, G06F 3/048, H04W 4/00

(54) **ENREGISTREMENT DE SERVICE DANS UN RÉSEAU LOCAL**
DIENSTAUFZEICHNUNG IN EINEM LOKALEN NETZWERK
SERVICE RECORDING IN A LOCAL AREA NETWORK

(30) Priorité: 25.03.2016 FR 1652631
(43) Date de publication de la demande: 30.01.2019
(73) Titulaire: Orange, 75015 Paris (FR)
(72) Inventeur: VINCENT, Yoann, 92326 Châtillon Cedex (FR); BRICHETEAU, Dimitri, 35000 Rennes (FR); CARBONNEL, Louis-Xavier, 35740 Pace (FR)
(86) Numéro de dépôt international: PCT/FR2017/050682
(87) Numéro de publication internationale: WO 2017/162989

(56) Documents cités:
- MICHAEL RIETZLER ET AL: "homeBLOX", PROCEEDINGS OF THE 2013 ACM CONFERENCE ON PERVASIVE AND UBIQUITOUS COMPUTING ADJUNCT PUBLICATION, UBICOMP '13, ZÜRICH, SWITZERLAND, 1 janvier 2013 (2013-01-01), pages 801-808, XP055269762, New York, New York, USA DOI: 10.1145/2494091.2497321 ISBN: 978-1-4503-2215-7
- David Thomas ET AL: "Thingies for Dummies: A smart home infrastructure for the rest of us", , 1 janvier 2012 (2012-01-01), XP055332273, Extrait de l'Internet: URL:http://www.itu.dk/~tped/teaching/perva sive/SPCL-E2012/example_reports/group05_F2 012_thingiesfordummies.pdf [extrait le 2017-01-04]

## Description

### Domaine technique

### Domaine technique

L'invention se rapporte au domaine des télécommunications et plus particulièrement à un réseau local de communications.

De manière générale, l'invention s'applique aux équipements d'un tel réseau.

### Etat de la technique

Un réseau domestique est un réseau informatique qui relie ensemble, avec ou sans fils, les équipements terminaux, ou plus simplement terminaux, d'une maison (ordinateurs, périphériques d'impression, de stockage, périphériques domotiques, etc.), aptes à communiquer ensemble. Un réseau domestique comporte un équipement routeur, aussi communément appelé passerelle, élément intermédiaire assurant la redirection, ou routage, des paquets de données entre les différents terminaux et réseaux qui lui sont connectés.

Dans le contexte d'un réseau domestique, un utilisateur a la possibilité d'exécuter un service donné sur un terminal donné disposant de caractéristiques propres (par exemple, visualiser les photographies numériques de l'utilisateur sur un téléviseur ou sur une tablette numérique, commander un équipement domotique, etc.). Un tel service peut être vu comme un ensemble de composantes logicielles, ou programmes, associées à un ensemble de composantes matérielles.

Dans certains cas, il est souhaitable d'exécuter un tel service sur plusieurs équipements terminaux (tablette, smartphone, TV, PC, lampes, radiateurs, etc.) d'un même utilisateur, selon une séquence ordonnée d'actions élémentaires : par exemple, un utilisateur peut souhaiter visualiser un film sur son téléviseur, et pour cela fermer au préalable un volet (store) roulant et allumer une lampe afin de bénéficier des conditions d'éclairage optimales.

L'utilisateur peut exécuter ces actions manuellement, mais cette opération est fastidieuse, en particulier lorsque le même service doit être exécuté plusieurs fois.

Dans le domaine de la domotique, il existe des solutions pour sélectionner un scénario simple depuis une télécommande ou un smartphone. Ce type de scénario n'engage cependant que des terminaux domotiques de type objets connectés (capteurs, lampes, etc.), dont l'utilisateur a une connaissance préalable puisqu'il a lui-même installé ces objets dans le réseau local.

Cependant l'utilisateur doit, dans ce contexte, connaître lui-même les différents terminaux de son réseau et les différentes actions qu'il est possible d'effectuer sur les différents terminaux pour définir son service. Le document MICHAEL RIETZLER ET AL: "homeBLOX", PROCEEDINGS OF THE 2013 ACM CONFERENCE ON PERVASIVE AND UBIQUITOUS COMPUTING ADJUNCT PUBLICATION, UBICOMP '13, ZÜRICH, SWITZERLAND, 1 January 2013 (2013-01-01), New York, New York, USA, pages 801 - 808, ISBN: 978-1-4503-2215-7, DOI: 10.1145/2494091.2497321 décrit un système domotique programmable par un utilisateur.

Il n'existe donc pas aujourd'hui de solution pour construire simplement et automatiquement, dans un réseau local, un scénario portant sur tous les terminaux du réseau.

L'invention offre une solution ne présentant pas les inconvénients de l'état de la technique.

### L'invention

Selon un aspect fonctionnel, l'invention concerne un procédé d'enregistrement d'un service dans un réseau local, ledit service étant constitué d'un ensemble d'actions à effectuer sur au moins un terminal du réseau apte à rendre une partie du service, ledit procédé étant décrit dans la revendication 1.

Avantageusement selon cette approche, un service peut être enregistré en association avec un identifiant unique, de manière à être ultérieurement mis en œuvre de manière très simple, quelle que soit la complexité du service et le nombre de terminaux impliqués. Une étape préalable de découverte permet de présenter à l'utilisateur les terminaux disponibles dans son réseau et les différents services qu'il peut exécuter à l'aide de ces terminaux. L'utilisateur n'a pas nécessairement de connaissance préalable de ces terminaux. En outre ces terminaux peuvent être « inaccessibles » au moment de la découverte (par exemple, éteints).

Par « service », on entend ici un ensemble d'actions à effectuer sur au moins un terminal du réseau apte à rendre une partie du service.

Par « partie du service » on entend ici une action participant au service, exécutée sur un seul terminal, notamment une action physique (éteindre la lumière, allumer le téléviseur, baisser un store, baisser la luminosité d'une lampe, lancer le décodage d'un film, etc.) ou logicielles (modifier une variable, envoyer un message, etc.)

Par « découverte » on entend une opération bien connue de l'homme du métier, qui peut être mise en œuvre sous forme d'une requête conforme à un protocole de réseau local, par exemple la norme UPnP, ou la norme BLE (*Bluetooth Low Energy*)*.* La norme UPnP a pour but de permettre à des terminaux de se connecter aisément et de communiquer simplement au sein d'un réseau local. Elle constitue un ensemble de protocoles de communication basés sur le protocole IP et promulgué par le forum de normalisation UPnP (« UPnP Forum »). Pour contrôler les terminaux du réseau, UPnP utilise des points de contrôle, émettant classiquement vers les différents terminaux du réseau des messages dits de découverte (MSEARCH) afin de récupérer en retour une description des terminaux correspondant à la requête. Ces messages de découverte sont émis le plus souvent en mode de communication point vers multipoint, mode aussi appelé multicast, du point de contrôle vers les terminaux. Un équipement terminal compatible avec la norme UPnP répond à ces messages de requête en fournissant ses caractéristiques (type de terminal, capacités matérielles et logicielles, etc.). La norme BLE, une technique de transmission sans fil disponible sous forme d'un standard ouvert et dont le but est de fournir une puissance réduite par rapport aux applications standard de la norme Bluetooth, propose également un mécanisme de découverte de terminaux. Les terminaux BLE destinés à être découverts (appelés « périphériques » dans BLE) émettent périodiquement, en mode point vers multipoint, des messages sur des canaux définis par la norme BLE. Ces messages, nommés « advertisements » ou encore « beacons », contiennent entre autres la description du terminal et les services qu'il propose. Ces services sont référencés dans les « advertisements » par des UUIDs (*Universally Unique Identifier*)*.* Ainsi, en se mettant en écoute sur les canaux dédiés aux « advertisements » BLE, puis en interprétant les messages reçus (dont le format est normalisé), un équipement du réseau domestique (par exemple la passerelle de service), va pouvoir découvrir les terminaux BLE disponibles, et les services associés. Tout autre protocole autorisant une découverte peut être envisagé (Zigwave, etc.)

Par « construction du service » on entend l'établissement d'une liste d'actions à effectuer sur l'un au moins des terminaux du réseau. Ces actions peuvent être enchaînées ou non dans le temps. Selon l'exemple déjà cité, la construction du service équivaut à saisir (par exemple via une interface graphique) l'enchaînement les actions élémentaires suivantes, de manière séquentielle ou non :
- baisser le store (action sur le store) ;
- allumer la lampe (action sur la lampe) ;
- allumer le décodeur numérique et le téléviseur (action sur le décodeur numérique et le téléviseur).
- lancer la restitution d'un contenu audio-visuel sur le téléviseur (action sur le décodeur numérique).

Par « association du service à un identifiant unique », on entend l'établissement d'une relation entre le service (en tant que liste d'actions élémentaires) et un identifiant qui peut être par exemple une suite de lettres, de chiffres, une image, une clé numérique, un son, etc. ou tout autre identifiant, du moment qu'il puisse être distingué des autres identifiants potentiels. On notera qu'un identifiant n'est pas associé à un utilisateur, mais bien à un service ou à un ensemble de sous-services d'un même service (comme il sera détaillé dans la suite, l'identifiant peut en effet déclencher un premier sous-service lors d'une première utilisation, puis un second sous-service lors d'une seconde utilisation, etc., le second sous-service étant lié au premier).

Par « enregistrement du service et de son identifiant » on entend la mémorisation du service (en tant que liste d'actions élémentaires) et de son identifiant associé en mémoire, par exemple de l'un des terminaux du réseau local, de la passerelle de service, ou d'un dispositif à l'extérieur du réseau local (dans le cloud), etc.

Avantageusement, si l'identifiant unique est obtenu avant la construction du service, le procédé selon l'invention peut automatiquement proposer à l'utilisateur de configurer le service associé, par exemple via une interface homme-machine située sur un quelconque des terminaux reliés au réseau, de manière à ce que l'utilisateur puisse ultérieurement réutiliser cet identifiant connu pour mettre en œuvre le service. Mais on peut aussi envisager que l'utilisateur configure dans un premier temps le service puis obtienne l'identifiant à lui associer.

Selon un mode de mise en œuvre particulier de l'invention, un procédé tel que décrit ci-dessus est en outre caractérisé en ce que l'étape d'acquisition de l'identifiant unique est suivie d'une étape de test de l'association dudit identifiant à un service, et en ce que les étapes de construction, d'association et d'enregistrement du service sont effectuées seulement si l'identifiant n'est pas déjà associé à un service.

Avantageusement selon ce mode, le service est construit et enregistré seulement la première fois que l'identifiant unique est proposé au système mettant en œuvre le procédé.

Selon un second mode de mise en œuvre particulier de l'invention, qui pourra être mis en œuvre alternativement ou cumulativement avec le précédent, un procédé tel que décrit ci-dessus est en outre caractérisé en ce que l'identifiant unique est obtenu par la lecture d'une étiquette sans contact.

Ce mode de mise en œuvre de l'invention permet à l'utilisateur d'utiliser très simplement une étiquette, ou « pion » sans contacts de type NFC (Near Field Communication) ou plus largement RFID (pour Radio Frequency Identification) pour déclencher l'enregistrement de son service. Un lecteur d'étiquettes sans contacts peut être disposé par exemple sur le terminal qui procède à l'enregistrement du service (terminal quelconque du réseau, terminal dédié, passerelle de service, etc.)

Un « tag NFC » est une étiquette électronique équipée de la technologie NFC sans contact. Chaque tag dispose d'un identifiant unique (UID) sous la forme de plusieurs octets de données. Le tag peut être réinscriptible ou non.

Selon un troisième mode de mise en œuvre particulier de l'invention, qui pourra être mis en œuvre alternativement ou cumulativement avec les précédents, ledit procédé comporte les étapes suivantes :
- Obtention, ultérieurement à la première obtention, d'un identifiant unique du service ;
- Obtention des données du service à partir de l'identifiant unique ;
- Mise en œuvre du service sur au moins un terminal du réseau local.

Avantageusement selon ce mode, une nouvelle obtention d'un identifiant qui a déjà été enregistré, lors d'une première obtention, en association avec un service, déclenche la mise en œuvre de ce service.

Selon une variante de ce mode de mise en œuvre particulier de l'invention, un procédé tel que décrit ci-dessus est caractérisé en ce que l'obtention, ultérieurement à la première obtention, de l'identifiant, est obtenue par la lecture d'une étiquette sans contact.

Avantageusement selon ce mode, l'identifiant unique qui a été enregistré lors d'une première présentation d'une étiquette NFC est réutilisé très simplement pour la mise en œuvre du service, par simple présentation de l'étiquette au système mettant en œuvre le procédé. Un lecteur d'étiquettes sans contact peut être disposé par exemple sur un terminal du réseau, la passerelle de service, etc.

Selon un quatrième mode de mise en œuvre particulier de l'invention, qui pourra être mis en œuvre alternativement ou cumulativement avec les précédents, un procédé tel que décrit ci-dessus est en outre caractérisé en ce que le service est associé à un ensemble de sous-services, chaque sous-service étant identifié par un numéro de sous-service dans l'ensemble des sous-services, et en ce qu'une nouvelle obtention, postérieurement à la première, de l'identifiant unique du service, déclenche la mise en œuvre d'un sous-service identifié par un numéro de sous-service.

Avantageusement selon ce mode, le service est associé à un ensemble de sous-services qui peuvent présenter des variantes du même service, qui peuvent être par exemple une variation de l'un des paramètres sur l'un des équipements (luminosité croissante/décroissante de la lampe à chaque présentation de l'identifiant, changement de contenu multimédia, etc.). Chaque obtention de l'identifiant déclenche un nouveau sous-service dans l'ensemble des sous-services associés au service, et donc à l'identifiant.

Selon une variante de ce mode de réalisation de l'invention, un procédé de mise en œuvre tel que décrit ci-dessus est en outre caractérisé en ce que le dernier sous-service associé au service remet les terminaux du réseau dans l'état où ils se trouvaient avant le déclenchement du premier sous-service.

Avantageusement selon ce mode, la dernière obtention de l'identifiant, mettant en œuvre le dernier sous-service dans l'ensemble des sous-services, permet de remettre les équipements du réseau dans l'état où ils se trouvaient avant la mise en œuvre du service. par exemple, un équipement qui a été allumé/mis sous tension lors de la mise en œuvre du service peut être éteint par la mise en œuvre du dernier sous-service.

Selon un cinquième mode de mise en œuvre particulier de l'invention, qui pourra être mis en œuvre alternativement ou cumulativement avec les précédents, un procédé tel que décrit ci-dessus est en outre caractérisé en ce que l'étape de découverte est suivie d'une étape d'acquisition automatique de composantes logicielles nécessaires pour rendre une action sur un terminal découvert.

Avantageusement selon ce mode, si un terminal découvert n'est pas encore connu de l'équipement qui sera chargé ultérieurement de la mise en œuvre du service (typiquement, la passerelle de service), un téléchargement automatique de composantes logicielles (plugins) de communications est réalisé. Il sera ainsi possible, lors de la mise en œuvre effective du service, de pouvoir dialoguer avec des équipements terminaux dont les interfaces n'étaient pas encore connues.

Selon un aspect matériel, l'invention concerne aussi un dispositif tel que décrit dans la revendication 9.

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

Selon un autre aspect matériel, l'invention concerne également une passerelle de service comprenant un dispositif d'enregistrement d'un service tel que décrit précédemment.

Selon un autre aspect matériel, l'invention concerne également un programme d'ordinateur apte à être mis en œuvre dans un procédé d'enregistrement d'un service tel que défini ci-dessus, le programme comprenant des instructions de code qui, lorsque le programme est exécuté par un processeur, réalise les étapes du procédé d'enregistrement.

Ce dispositif pour l'enregistrement d'un service et ce programme d'ordinateur présentent des caractéristiques et avantages analogues à ceux décrits précédemment en relation avec le procédé d'enregistrement d'un service.

Selon encore un autre aspect matériel, l'invention a trait à un support d'enregistrement lisible par un processeur de données sur lequel est enregistré un programme comprenant des instructions de code de programme pour l'exécution des étapes du procédé défini ci-dessus.

L'invention sera mieux comprise à la lecture de la description qui suit, donnée à titre d'exemple et faite en référence aux dessins annexés.

### Les figures:

La figure 1 représente le contexte général d'un mode de réalisation de l'invention.
La figure 2 représente schématiquement une architecture d'une passerelle de service implémentant un mode de réalisation de l'enregistrement et de la mise en œuvre d'un service selon l'invention.
La figure 3 représente sous forme d'organigramme l'enregistrement et la mise en œuvre d'un service selon un mode de réalisation de l'invention

### Description détaillée d'un exemple de réalisation illustrant l'invention

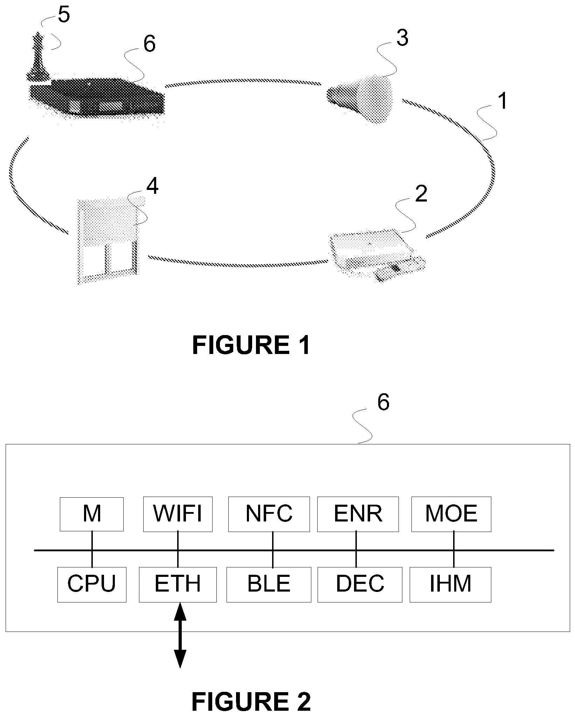

La figure 1 représente le contexte général d'un mode de réalisation de l'invention.

Le réseau local (1) est par exemple un réseau local IP (Internet Protocol). Le réseau (1) comporte selon cet exemple un élément de gestion du réseau (6) (une passerelle résidentielle, domestique, un hub, etc.) appelée dans la suite « passerelle de service » et des équipements terminaux (2,3,4) connectés sur ce réseau local, aptes à établir des communications entre eux. Il s'agit respectivement, selon cet exemple, d'une ampoule connectée (3), d'un décodeur numérique (2) et d'un store électrique connecté (4)

Ces terminaux sont de nature hétérogène. Ils peuvent, notamment, différer par leur système d'exploitation (Windows, Linux, Android, etc.), leur type de connexion au réseau (Ethernet, Wifi, Bluetooth, BLE, etc.), les actions dont ils sont capables (décoder un programme audiovisuel, se positionner sur un canal TV , s'allumer, se baisser, etc.)

Par la suite, on entend par équipement terminal, ou plus simplement terminal, tout dispositif apte à se connecter et communiquer sur le réseau local.

Dans la suite de la description de ce mode de réalisation particulier de l'invention, on considère le service suivant, dont l'identifiant est celui d'une étiquette dite « sans contact » (5) correspondant au service, par exemple une étiquette NFC.

On rappelle que les communications en champ proche, usuellement appelées NFC (Near Field Communication), basées principalement sur la norme ISO (International Standard Organisation) 14443, utilisent des technologies sans-fils pour permettre un échange d'informations entre deux périphériques éloignés d'une courte distance, typiquement inférieure à dix centimètres. Dans ce contexte, les applications de « tag reading » tel que définies par le Forum NFC (association industrielle chargée de promouvoir la mise en œuvre et la normalisation de la technologie NFC) définissent l'établissement d'une communication dite « sans contact » entre un maître, ici appelé lecteur, et un esclave, ici appelé étiquette. Par exemple, le lecteur se trouve sur la passerelle de service et l'étiquette est intégrée dans un « pion » NFC (5) qui lui sert de support et est de surcroît facilement reconnaissable par l'utilisateur. L'établissement de la communication NFC permet de lire les informations inscrites dans l'étiquette, notamment son identifiant unique (UID).

Dans le contexte de ce mode de réalisation, l'étiquette NFC est associée au service par une première présentation du pion au lecteur NFC. L'identifiant du pion est lu par le lecteur qui la transmet dans cet exemple à la passerelle de service. La passerelle affiche alors une interface homme-machine (IHM) de saisie, par exemple un tableau de bord ou une application de contrôle, afin que l'utilisateur saisisse le service qui l'intéresse ; lorsque l'utilisateur a fini de décrire son service, celui-ci est enregistré en association avec l'identifiant unique du pion. Par la suite, lorsqu'il souhaite exécuter le service, l'utilisateur présente de nouveau le pion au lecteur NFC de la passerelle de service, afin qu'une seconde lecture de l'identifiant unique associé à l'étiquette, et donc désormais au service, déclenche les évènements suivants :
- baisser le store (action sur le store)
- allumer la lampe en position tamisée (action sur la lampe)
- allumer le décodeur numérique et le téléviseur (action sur le décodeur numérique et le téléviseur).
- lancer la restitution d'un contenu audio-visuel sur le téléviseur (action sur le décodeur numérique).

Par ailleurs, selon une variante, le service est constitué d'un ensemble de sous-services, chaque sous-service étant associé de plus à un numéro de sous-service. Un exemple de services et sous-services est illustré dans la table ci-dessous :

**Table 1 : exemple de service et sous-services associés.**

| #123456789 | |
|---|---|
| SERVICE de visionnage de contenu multimédia | |
| Numéro de sous-service | Actions |
| 1 | A. baisser le store 4 |
| | B. allumer la lampe 3 en position tamisée |
| | C. allumer le décodeur numérique 2 et le téléviseur. |
| | D. lancer la restitution d'un contenu audio-visuel sur le téléviseur |
| 2 | B2. augmenter l'intensité de la lampe 3 |
| 3 | A. éteindre le décodeur numérique 2 et le téléviseur. |
| | B. éteindre la lampe 3 |
| | C. relever le store 4 |

Le service S d'identifiant #123456789 est constitué de trois sous-services numérotés 1, 2 3.
- le premier passage de l'étiquette déclenche l'enregistrement du service
- un second passage de l'étiquette déclenche le sous-service 1 décrit ci-dessus.
- un troisième passage de l'étiquette déclenche le sous-service numéro 2, ce qui se traduit une augmentation du volume lumineux de la lampe (de tamisée à moyenne) ;
- un quatrième passage de l'étiquette déclenche le sous-service numéro 3, qui correspond à une remise en état des équipements du réseau tels qu'ils se trouvaient avant l'activation du service.

Naturellement, il s'agit seulement d'un exemple d'utilisation parmi d'autres. L'utilisateur est ainsi déchargé d'une action manuelle sur chacun des équipements du réseau. Il lui suffit de présenter le pion NFC au lecteur pour que le service, ou l'un des sous-services, soit mis en œuvre.

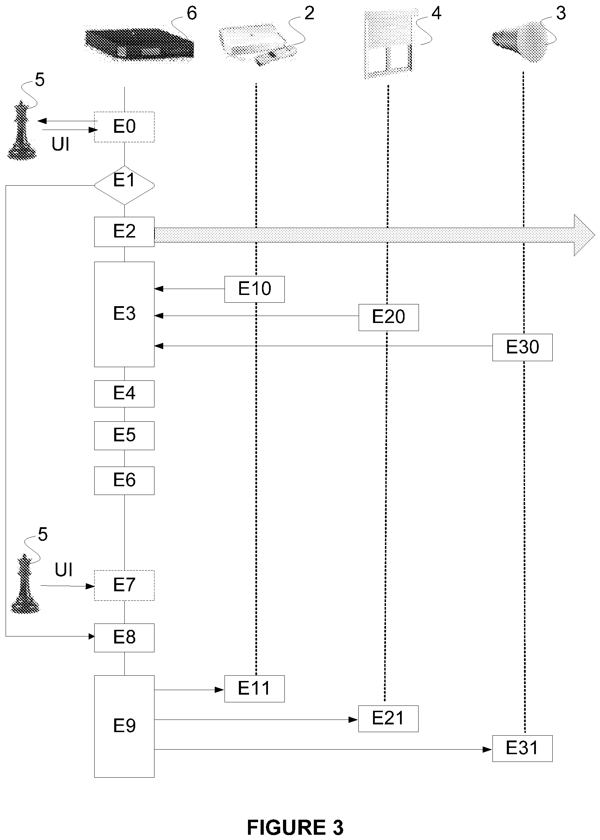

Une version algorithmique plus complète sera détaillée plus tard à l'appui de la figure 3.

L'invention offre ainsi une solution souple, puissante et simple pour enregistrer et mettre en œuvre un service dans le réseau local.

La figure 2 représente schématiquement une architecture d'un terminal implémentant un mode de réalisation de l'enregistrement et de la mise en œuvre d'un service selon l'invention.

De manière préférentielle, il s'agit de la passerelle de service (6).

La passerelle (6) comprend, classiquement, des mémoires (M) associées à un processeur (CPU). Les mémoires peuvent être de type ROM (de l'anglais Read Only Memory) ou RAM (de l'anglais *Random Access Memory*) ou encore Flash. Elle communique avec le réseau local via le module Ethernet (ETH) d'une part et éventuellement un module WIFI pour une communication sans fil. Elle est aussi équipée d'un module Bluetooth Low Energy (BLE).

La passerelle (6) comprend en outre, conformément à l'invention, les modules suivants :
- un module d'interface utilisateur (IHM pour Interface Homme Machine) permettant d'acquérir notamment la description du service par l'utilisateur ; par interface utilisateur, on entend l'ensemble des informations et mécanismes matériels et logiciels permettant à un utilisateur de communiquer avec le dispositif. Il peut s'agir, indifféremment d'un clavier, d'une interface graphique (pour laquelle les objets à manipuler sont présentés sous forme de pictogrammes sur lesquels l'usager peut imiter des manipulations physiques), d'une interface de type Web (une interface graphique d'une application Web, se manipulant à l'aide d'un navigateur Web), ou encore d'une interface vocale, etc.
- un module logiciel DEC apte à recevoir, et éventuellement requérir, lors d'une étape dite de découverte, les capacités matérielles et/ou logicielles des terminaux du réseau local en utilisant l'un des modules de communication à sa disposition : soit le module WIFI, soit le module ETH, soit le BLE, etc.
- un module NFC lui permettant de lire l'identifiant du service contenu dans l'étiquette NFC.
- un module ENR lui permettant d'enregistrer la description du service, (ou d'un ensemble de sous-services) et l'identifiant du service en association avec sa description.
- un module MOE lui permettant de mettre en œuvre le service en transmettant aux terminaux appropriés les commandes requises.

La figure 3 représente sous forme d'organigramme l'enregistrement et la mise en œuvre d'un service selon un mode de réalisation de l'invention.

On reprend ici le service évoqué à l'appui de la figure précédente, à savoir : l'utilisateur du réseau (1) souhaite visualiser un film sur son téléviseur connecté au décodeur numérique (2), et pour cela fermer le volet roulant (4) et allumer une lampe (3) afin de bénéficier des conditions d'éclairage optimales.

La mise en œuvre globale de l'invention se déroule en trois phases distinctes :
- une phase de découverte des terminaux du réseau et de leurs capacités ;
- une phase d'enregistrement du service ou des sous-services associés au service ;
- une phase ultérieure de mise en œuvre du service sur les différents équipements.

### Phases de découverte et d'enregistrement du service

Lors d'une étape E0, une première lecture du pion et de l'identificateur unique (UI) contenu à l'intérieur de l'étiquette est réalisée par le lecteur NFC situé dans cet exemple sur la passerelle de service (6).

Lors d'une étape E1 successive, l'identifiant UI est testé. Si cet identifiant est connu de la passerelle, c'est-à-dire si un service a déjà été associé à l'identifiant unique du pion, les étapes immédiatement suivantes d'enregistrement du service ne sont pas effectuées, l'étape E1 sera suivie de l'étape E8.

Sinon, s'il s'agit d'un nouvel identifiant, l'étape E1 est suivie d'une étape E2 dite de « découverte ». Cette étape E2, initiée dans cet exemple par une requête de la passerelle sur le réseau local, est suivie d'une étape E3 de réception des caractéristiques que les terminaux (2, 4, 3) du réseau déclarent au cours des étapes respectives E10, E20, E30. Selon une alternative, chacun des terminaux déclare spontanément ses capacités, par exemple lors de sa première connexion au réseau local, ou à la première mise sous tension, lorsque les différents terminaux ne se connaissent pas encore.

Un terminal peut transmettre par exemple certaines ou l'ensemble des informations suivantes :
∘ son identifiant,
∘ son type (capteur de mouvement, de soleil, de vent, décodeur numérique, etc.)
∘ le nom et l'unité d'un paramètre physique mesurée,
∘ les valeurs minimales et maximales mesurées,
∘ etc.

La transmission des capacités peut se faire par exemple sous la forme d'une structure de données (fichier, etc.), diffusé sur le réseau au cours de cette étape de découverte. La transmission du fichier de données peut être réalisée en une fois ou en plusieurs.

De surcroît, la passerelle peut connaître un équipement, sans que celui-ci soit explicitement visible sur le réseau, notamment parce qu'il est hors tension : par exemple la passerelle peut connaître le décodeur numérique (parce qu'elle l'a enregistré au préalable dans ses bases de données) et le proposer dans la liste des équipements disponibles, bien qu'il soit absent au moment où l'utilisateur souhaite enregistrer le service.

On notera aussi que les étapes de découverte (E2, E3, E10, E20, E30) peuvent se situer avant les étapes E0 et E1 d'obtention de l'identifiant.

Ces phases de découverte peuvent être implémentées de manière propriétaire ou se conformer, comme déjà décrit, à une norme de type UPnP ou BLE.

Lors d'une étape E4, l'utilisateur saisit, par exemple en utilisant une interface homme-machine d'un smartphone, ou d'un écran connecté à la passerelle de service, ou encore de son téléviseur, le service S. Selon l'exemple de service mentionné à la figure 1 et à la Table 1, pour rendre le service S souhaité par l'utilisateur, celui-ci sélectionne successivement via l'IHM :
- le store ; action : baisser le store ;
- la lampe ; action : allumer en position tamisée ;
- le décodeur numérique ; action : allumer le décodeur numérique et le téléviseur s'ils ne sont pas déjà allumés ;
- le décodeur numérique ; action : lancer le décodage, puis la restitution d'un contenu audio-visuel sur le téléviseur.

Au préalable, par exemple suite à l'étape de découverte, les différents terminaux et caractéristiques associés peuvent avoir été proposés à l'utilisateur de manière à faciliter la définition du service.

Lors d'une étape E5, l'identifiant unique est associé au service. Selon une variante déjà discutée, un ensemble de sous-services peut être associé au service (voir la table 1 ci-dessus).

Lors d'une étape E6, cette association est enregistrée en mémoire (par exemple, de la passerelle de service)

### Phase de mise en œuvre du service

Lors d'une étape E7, identique à l'étape E0, l'utilisateur présente de nouveau son pion au lecteur NFC. La mise en œuvre du service est distincte de son enregistrement. L'étape E7 n'est donc pas liée dans le temps à l'étape précédente E6.

Le lecteur obtient l'identifiant de l'étiquette et le transmet au dispositif de la passerelle. Comme il s'agit ici de la seconde (ou ultérieure) lecture de l'identifiant, le dispositif reconnaît que l'identifiant est déjà associé à un service ; il s'ensuit, lors de l'étape E8, une obtention de la description du service à partir de l'identifiant. Par exemple, l'identifiant unique permet d'indexer une table en mémoire comportant la liste des actions à mettre en œuvre pour le service, comme présenté précédemment.

Lors de l'étape E9, le service est mis en œuvre sur les différents terminaux (2,3,4).

En variante, comme décrit précédemment (table 1), un troisième passage du pion peut déclencher une augmentation de l'intensité lumineuse de la lampe au cours d'étapes E'7 de lecture de l'identifiant identique à l'étape E7 avec de surcroît l'obtention du numéro de passage. Comme il s'agit du troisième passage, le sous-service numéro 2 est mis en œuvre. L'étape E'7 est suivie d'une étape E'8 d'obtention de la description du sous-service à partir de l'identifiant et du numéro de passage, puis d'une étape E'9 d'action sur la lampe pour augmenter son intensité.

En variante, comme décrit précédemment, un quatrième et dernier passage du pion devant le lecteur NFC peut déclencher des actions « inverses » des actions de mise en œuvre du service selon les étapes E"7 de lecture de l'identifiant et d'analyse du numéro de passage (quatrième et dernier passage, entraînant le sous-service 3), E"8 d'obtention de la description du sous-service 3 à partir de l'identifiant et du numéro de passage, et E"9 de mise en œuvre des actions appropriées sur les terminaux pour remettre le réseau « en l'état ».

Il va de soi que le mode de réalisation qui a été décrit ci-dessus a été donné à titre purement indicatif et nullement limitatif, et que de nombreuses modifications peuvent être facilement apportées par l'homme de l'art.

De nombreux autres exemples de service peuvent notamment être proposés :
- Allumer un poste de radio internet et changer de station (parmi les stations préférées) à chaque passage de tag ;
- Allumer une lampe et changer de couleur (parmi les couleurs préférées) à chaque passage de tag ;
- Allumer un système HiFi qui fonctionne dans plusieurs pièces de la maison, sur une liste de lecture (playlist) prédéfinie, et changer la pièce dans laquelle la musique est diffusée à chaque passage de tag.
- etc.

## Revendications

1. Procédé d'enregistrement d'un service dans un réseau local, ledit service étant constitué d'un ensemble d'actions à effectuer sur au moins un terminal du réseau apte à rendre une partie du service, ledit procédé comportant les étapes suivantes:
• Première obtention (E0) d'un identifiant unique dudit au moins un terminal correspondant à une étiquette sans contact ;
• Découverte (E2) des capacités des terminaux du réseau ;
• Acquisition (E3) des capacités des terminaux découverts ;
• Construction du service (E4) en tant qu'enchaînement d'actions sur au moins un terminal découvert, à l'aide de moyens d'interface utilisateur;
• Association (E5) du service audit identifiant unique (UI) ;
• Enregistrement (E6) du service et de l'identifiant unique associé.

2. Procédé selon la revendication 1, **caractérisé en ce que** l'étape de première obtention (E0) de l'identifiant unique est suivie d'une étape de test (E1) de l'association dudit identifiant à un service, et **en ce que** les étapes de construction (E4), d'association (E5) et d'enregistrement (E6) du service sont effectuées seulement si l'identifiant n'est pas déjà associé à un service.

3. Procédé selon la revendication 1, **caractérisé en ce que** l'identifiant unique (UI) est obtenu par la lecture (E0) de ladite étiquette sans contact (NFC, 5).

4. Procédé selon la revendication 1, ledit procédé comportant les étapes suivantes:
• Obtention (E7), ultérieurement à la première obtention, d'un identifiant unique (UI) du service correspondant à celui d'une étiquette sans contact ;
• Obtention (E8) des données du service à partir de l'identifiant unique ;
• Mise en œuvre (E9, E11, E21, E31) du service sur au moins un terminal du réseau local.

5. Procédé selon la revendication 4, **caractérisé en ce que** l'obtention (E7), ultérieurement à la première obtention (E0), de l'identifiant (UI) est obtenue par la lecture (E7) de ladite étiquette sans contact (5).

6. Procédé selon la revendication 1, **caractérisé en ce que** le service est associé à un ensemble de sous-services, chaque sous-service étant identifié par un numéro de sous-service dans l'ensemble des sous-services, et **en ce qu'**une nouvelle obtention (E7), postérieurement à la première, de l'identifiant unique du service, déclenche la mise en œuvre d'un sous-service identifié par un numéro de sous-service.

7. Procédé selon la revendication 6, **caractérisé en ce que** le dernier sous-service associé au service remet les terminaux du réseau dans l'état où ils se trouvaient avant le déclenchement du premier sous-service.

8. Procédé selon la revendication 1, **caractérisé en ce que** l'étape de découverte est suivie d'une étape d'acquisition automatique de composantes logicielles nécessaires pour rendre une action sur un terminal découvert.

9. Dispositif pour l'enregistrement d'un service dans un réseau local, ledit service étant constitué d'un ensemble d'actions à effectuer sur au moins un terminal du réseau apte à rendre une partie du service, ledit dispositif comportant :
• un module (NFC) pour une obtention (E0, E7) d'un identifiant unique dudit au moins un terminal correspondant à une étiquette sans contact ;
• un module (WIFI, ETH, BLE) pour la découverte (E2) des capacités des terminaux (1,2,3,4) du réseau ;
• un module (DEC) pour l'acquisition (E3) des capacités des terminaux découverts ;
• un module de moyens d'interface utilisateur (IHM) ;
• un module de construction du service (ENR) en tant qu'enchaînement d'actions sur au moins un terminal découvert, à l'aide des moyens d'interface utilisateur (IHM);
• un module d'association (ENR) du service audit identifiant unique ;
• un module d'enregistrement (ENR) du service et de l'identifiant associé.

10. Passerelle de service comprenant un dispositif d'enregistrement d'un service selon la revendication 9.

11. Programme d'ordinateur comportant des instructions de code pour la mise en œuvre du procédé de d'enregistrement d'un service conforme à la revendication 1, lorsque celle-ci est exécutée par un processeur.

## Patentansprüche

1. Verfahren zum Aufzeichnen eines Dienstes in einem lokalen Netzwerk, wobei der Dienst aus einer Menge von Aktionen besteht, die an mindestens einem Endgerät des Netzwerks durchzuführen sind, das geeignet ist, einen Teil des Dienstes zu erbringen, wobei das Verfahren die folgenden Schritte umfasst:
• Erstes Erhalten (E0) einer eindeutigen Kennung des mindestens einen Endgeräts, die einem kontaktlosen Tag entspricht;
• Entdecken (E2) der Kapazitäten der Endgeräte des Netzwerks;
• Erfassen (E3) der Kapazitäten der entdeckten Endgeräte;
• Erstellen des Dienstes (E4) als Verkettung von Aktionen auf mindestens einem entdeckten Endgerät mithilfe von Benutzerschnittstelleneinrichtungen;
• Zuordnen (E5) des Dienstes zu der eindeutigen Kennung (UI);
• Aufzeichnen (E6) des Dienstes und der zugeordneten eindeutigen Kennung.

2. Verfahren nach Anspruch 1, **dadurch gekennzeichnet, dass** auf den Schritt des ersten Erhaltens (E0) der eindeutigen Kennung ein Schritt des Prüfens (E1) der Zuordnung der Kennung zu einem Dienst folgt und dass die Schritte des Erstellens (E4), Zuordnens (E5) und Aufzeichnens (E6) des Dienstes nur durchgeführt werden, wenn die Kennung nicht bereits einem Dienst zugeordnet ist.

3. Verfahren nach Anspruch 1, **dadurch gekennzeichnet, dass** die eindeutige Kennung (UI) durch das Auslesen (E0) des kontaktlosen Tags (NFC, 5) erhalten wird.

4. Verfahren nach Anspruch 1, wobei das Verfahren die folgenden Schritte umfasst:
• Erhalten (E7), im Anschluss an das erste Erhalten, einer eindeutigen Kennung (UI) des Dienstes, die der eines kontaktlosen Tags entspricht;
• Erhalten (E8) der Daten des Dienstes anhand der eindeutigen Kennung;
• Ausführen (E9, E11, E21, E31) des Dienstes an mindestens einem Endgerät des lokalen Netzwerks.

5. Verfahren nach Anspruch 4, **dadurch gekennzeichnet, dass** das Erhalten (E7) der Kennung (UI) im Anschluss an das erste Erhalten (E0) durch das Auslesen (E7) des kontaktlosen Tags (5) erhalten wird.

6. Verfahren nach Anspruch 1, **dadurch gekennzeichnet, dass** der Dienst einer Menge von Teildiensten zugeordnet ist, wobei jeder Teildienst durch eine Teildienstnummer in der Menge der Teildienste gekennzeichnet ist, und dass ein erneutes Erhalten (E7) der eindeutigen Kennung des Dienstes, nach dem ersten, das Ausführen des durch eine Teildienstnummer gekennzeichneten Teildienstes auslöst.

7. Verfahren nach Anspruch 6, **dadurch gekennzeichnet, dass** der letzte dem Dienst zugeordnete Teildienst die Endgeräte des Netzwerks in den Zustand zurückversetzt, in dem sie sich vor dem Auslösen des ersten Teildienstes befanden.

8. Verfahren nach Anspruch 1, **dadurch gekennzeichnet, dass** auf den Schritt des Entdeckens ein Schritt des automatischen Erfassens von Softwarekomponenten folgt, die erforderlich sind, um eine Aktion an einem entdeckten Endgerät zu erbringen.

9. Vorrichtung zum Aufzeichnen eines Dienstes in einem lokalen Netzwerk, wobei der Dienst aus einer Menge von Aktionen besteht, die an mindestens einem Endgerät des Netzwerks durchzuführen sind, das geeignet ist, einen Teil des Dienstes zu erbringen, wobei die Vorrichtung umfasst:
• ein Modul (NFC) zum Erhalten (E0, E7) einer eindeutigen Kennung des mindestens einen Endgeräts, die einem kontaktlosen Tag entspricht;
• ein Modul (WIFI, ETH, BLE) zum Entdecken (E2) der Kapazitäten der Endgeräte (1, 2, 3, 4) des Netzwerks;
• ein Modul (DEC) zum Erfassen (E3) der Kapazitäten der entdeckten Endgeräte;
• ein Modul mit Benutzerschnittstelleneinrichtungen (IHM);
• ein Modul zum Erstellen des Dienstes (ENR) als Verkettung von Aktionen an mindestens einem entdeckten Endgerät mithilfe von Benutzerschnittstelleneinrichtungen (IHM);
• ein Modul zum Zuordnen (ENR) des Dienstes zu der eindeutigen Kennung;
• ein Modul zum Aufzeichnen (ENR) des Dienstes und der zugeordneten Kennung.

10. Dienste-Gateway, das eine Vorrichtung zum Aufzeichnen eines Dienstes nach Anspruch 9 umfasst.

11. Computerprogramm mit Codeanweisungen zum Ausführen des Verfahrens zum Aufzeichnen eines Dienstes nach Anspruch 1, wenn es von einem Prozessor abgearbeitet wird.

## Claims

1. Method for recording a service in a local area network, said service consisting of a set of actions to be performed on at least one terminal of the network that is able to provide part of the service, said method including the following steps:
• Initial procurement (E0) of a unique identifier of said at least one terminal corresponding to a contactless tag;
• Discovering (E2) the capabilities of the terminals of the network;
• Acquiring (E3) the capabilities of the discovered terminals;
• Constructing (E4) the service in the form of a sequence of actions on at least one discovered terminal, by way of user interface means;
• Associating (E5) the service with said unique identifier (UI);
• Recording (E6) the service and the associated unique identifier.

2. Method according to Claim 1, **characterized in that** the step of initially procuring (E0) the unique identifier is followed by a step of testing (E1) the association of said identifier with a service, and **in that** the steps of constructing (E4), associating (E5) and recording (E6) the service are performed only if the identifier is not already associated with a service.

3. Method according to Claim 1, **characterized in that** the unique identifier (UI) is procured by reading (E0) of said contactless tag (NFC, 5).

4. Method according to Claim 1, said method including the following steps:
• Procuring (E7), subsequent to the first procurement, a unique identifier (UI) of the service corresponding to that of a contactless tag;
• Procuring (E8) the data of the service from the unique identifier;
• Implementing (E9, E11, E21, E31) the service on at least one terminal of the local area network.

5. Method according to Claim 4, **characterized in that** the procurement (E7), subsequent to the first procurement (E0), of the identifier (UI) is achieved by reading (E7) of said contactless tag (5).

6. Method according to Claim 1, **characterized in that** the service is associated with a set of sub-services, each sub-service being identified by a sub-service number in the set of sub-services, and **in that** a new procurement (E7), following the first one, of the unique identifier of the service triggers the implementation of a sub-service identified by a sub-service number.

7. Method according to Claim 6, **characterized in that** the last sub-service associated with the service resets the terminals of the network to the state in which they were before the first sub-service was triggered.

8. Method according to Claim 1, **characterized in that** the discovery step is followed by a step of automatic acquisition of software components necessary to enable an action on a discovered terminal.

9. Device for recording a service in a local area network, said service consisting of a set of actions to be performed on at least one terminal of the network able to provide part of the service, said device including:
• a module (NFC) for procuring (E0, E7) a unique identifier of said at least one terminal corresponding to a contactless tag;
• a module (WIFI, ETH, BLE) for discovering (E2) the capabilities of the terminals (1, 2, 3, 4) of the network;
• a module (DEC) for acquiring (E3) the capabilities of the discovered terminals;
• a user interface means module (IHM);
• a module (ENR) for constructing the service in the form of a sequence of actions on at least one discovered terminal, by way of the user interface means (IHM);
• a module (ENR) for associating the service with said unique identifier;
• a module (ENR) for recording the service and the associated identifier.

10. Service gateway comprising a device for recording a service according to Claim 9.

11. Computer program including code instructions for implementing the method for recording a service according to Claim 1 when said computer program is executed by a processor.
